# EUROPÄISCHE PATENTSCHRIFT

(11) **EP 2 325 510 B1**
(45) Veröffentlichungstag und Bekanntmachung des Hinweises auf die Patenterteilung: **20.03.2013**
(21) Anmeldenummer: 10014061.5
(22) Anmeldetag: 27.10.2010
(51) Int. Cl.: F16D 3/78

(54) **Kupplung mit einem ringförmingen Kupplungskörper**
Coupling with a ring-shaped coupling
Embrayage doté d'un corps d'embrayage annulaire

(30) Priorität: 18.11.2009 DE 102009053725
(43) Veröffentlichungstag der Anmeldung: 25.05.2011
(73) Patentinhaber: Centa-Antriebe Kirschey GmbH, 42781 Haan (DE)
(72) Erfinder: Kirschey, Gerhard, 42329 Wuppertal (DE)
(74) Vertreter: Ostriga Sonnet Wirths & Vorwerk

(56) Entgegenhaltungen:
- DE-U- 1 981 653
- DE-U1-202004 003 933
- DE-U1-202008 015 810
- US-A- 2 754 667
- US-A- 3 364 698
- US-A- 3 636 729

## Beschreibung

Die Erfindung betrifft eine Kupplung, insbesondere Keilpaketkupplung, mit einem im Wesentlichen ringförmigen Kupplungskörper, welcher aus einer Vielzahl einzelner gummielastischer Segmente gebildet ist, in welche Befestigungsglieder mit Befestigungsbohrungen zur Anordnung an einem antreibenden und einem angetriebenen Maschinenbauteil sowie elastizitätsverringernde Elemente einvulkanisiert sind.

Solche gattungsgemäßen Kupplungen werden regelmäßig als Keilpaketkupplung bezeichnet und finden vornehmlich bei Schienenfahrzeugen wie insbesondere Straßenbahnen Anwendung. Hier koppeln sie das Getriebe mit der den Radsatz eines Triebfahrzeuges antreibenden Welle.

Die Keilpaketkupplung ist eine ausgesprochen steife Kupplung, deren Gummielemente durch das Einvulkanisieren von metallenen Platten in ihrer Elastizität weiter verringert sind.

Wie z.B. in DE 4 429 889 A1 gezeigt, besteht ein einzelnes Kupplungssegment beispielsweise aus zwei äußeren Befestigungsgliedern, welche an den Strahlen einer Sternnabe befestigt sind und zwischen sich ein mittleres Kupplungselement aufnehmen, welches über Axialbohrungen mit einem Antriebsflansch verbunden ist. In der Regel werden An- und Abtriebsseite über sechs solchermaßen ausgestattete einzelne Segmente miteinander befestigt, so dass die Segmente einen insgesamt in etwa ringförmigen Kupplungskörper bilden.

Bei der Zusammenstellung der einzelnen Kupplungssegmente für eine Keilpaketkupplung muss darauf geachtet werden, dass die Elastizitätswerte der einzelnen Segmente zueinander im Wesentlichen identisch sind. Anderenfalls würde sich die Kupplung in Betrieb exzentrisch in Richtung des schwächsten Segmentes verlagern, was zu einem unrundem Lauf und erheblicher Materialbelastung führt. Von daher ist es im Stand der Technik notwendig, die einzelnen Segmente hinsichtlich ihrer Elastizitätswerte zu prüfen und zu Kupplungsbausätzen zusammenzuführen. Dies führt im Rahmen der Produktion und Lagerhaltung zu einem nicht unerheblichen Aufwand.

Aufgabe der Erfindung ist es, eine Kupplung der gattungsgemäßen Art derart weiterzubilden, dass der Prüf- und Lagerhaltungsaufwand für die einzelnen Segmente wesentlich verringert ist.

Gelöst wird die Aufgabe von einer Kupplung mit den Merkmalen des Anspruchs 1, insbesondere mit dem kennzeichnenden Merkmalen, wonach Segmente mittels scharnierartiger Verbindungselemente aneinander festgelegt sind und einen einstückigen, radial aufweitbaren, im Wesentlichen ringförmigen Kupplungskörper bilden.

Dabei ist insbesondere daran gedacht, dass die Segmente zwei einstückige in etwa halbrinförmige Kupplungselemente bilden, wobei die zwei halbringförmigen Kupplungselemente mittels eines scharnierartigen Verbindungselementes verbunden sind und einen einstückigen, im wesentlichen ringförmigen Kupplungskörper bilden.

Der wesentliche Vorteil der Erfindung ist darin zu sehen, dass die einzelnen Segmente unverlierbar miteinander verbunden sind, wobei die scharnierartigen Verbindungselemente in besonders bevorzugter Weise werkstoffeinheitlich-stoffschlüssige Bestandteile des gummielastischen Körpers sind. Diese werden durch das Vulkanisieren direkt erhalten und sind nach Art eines Filmscharniers ausgebildet. Da die Vulkanisationsbedingungen für die einzelnen Segmente einer derart hergestellten Kupplung identisch sind, weisen die Segmente auch identische Elastizitäts- und Dämpfungswerte auf. Durch ihre unverlierbare Festlegung aneinander sind sie montagefertig einander zugeordnet. Die aus dem Stand der Technik bekannte, aufwendige Elastizitätsprüfung der einzelnen Segmente, sowie die Sortierung und entsprechende Lagerhaltung gleichartiger Einzelsegmente entfällt.

Darüber hinaus ergibt sich in überraschender Weise auch ein positiver Effekt für die Montage. Anstelle eine Vielzahl von Einzelsegmenten aufwendig einpassen zu müssen, kann der ringförmige Kupplungskörper aufgeweitet und beispielsweise um eine zylinderartige Nabe herumgelegt werden. Er wird mit dieser dann radial verschraubt und über Axialbohrungen in entsprechenden Befestigungselementen mit einem benachbarten Schwungrad verbunden. Hierdurch ist der Einsatz von aufwendig zu produzierenden Sternnaben überflüssig. Gleichzeitig werden auch die Vorteile der Kupplung gemäß DE 20 2008 015 810 verwirklicht, bei welcher eine gattungsgemäße Kupplung vorgeschlagen wurde, welche über eine Radialbefestigung die erforderliche radial Vorspannung auf die einzelnen Segmente des Kupplungskörpers aufbringt.

Bilden die einzelnen Segmente lediglich zwei Kupplungselemente, welche mittels eines scharnierartigen Verbindungsstückes einstückig aneinander festgelegt sind, so erhöht dies die Stabilität der Verbindung der einzelnen Segmente untereinander bei den gleichen, vorgenannten Vorteilen.

Es kann vorgesehen sein, dass das scharnierartige Verbindungsstück an ein erstes Befestigungsglied anvulkanisiert ist.

Je nach Anforderung ist es denkbar, dass das scharnierartige Verbindungsstück unmittelbar an zwei benachbarten Befestigungsgliedern befestigt ist, oder dass das scharnierartige Verbindungselement unmittelbar an einem Befestigungsglied und einem benachbarten Ansatzstück befestigt ist.

Das Ansatzstück ist dann insbesondere dafür vorgesehen, dass ein teilringförmiges Kupplungselement betriebssicher am anderen teilringförmigen Kupplungselement festlegbar ist.

Besonders bevorzugt ist darüber hinaus auch eine Ausführungsform, welche sich dadurch kennzeichnet, dass das scharnierartige Verbindungselement die Teile eines zweiteilig stufenartig aufgespaltenen Befestigungsgliedes miteinander verbindet.

Dies hat den wesentlichen Vorteil, dass die Verbindung der einzelnen Segmente bzw. der zwei teilringförmigen Kupplungselemente durch Einsetzen des Befestigungsbolzens zur Anordnung der Kupplung am An-oder Abtrieb erfolgt. Weitere Montageschritte zur Befestigung der Segmente aneinander sind nicht erforderlich.

Dabei ist insbesondere vorgesehen, dass das Befestigungsglied die Längsachse der Befestigungsbohrung schneidend, insbesondere quer schneidend, aufgespalten ist.

Weitere Vorteile der Erfindung ergeben sich aus der nachfolgenden Beschreibung einiger Ausführungsbeispiele. Es zeigen:
- Fig. 1: Eine erfindungsgemäße Kupplung in einer ersten Ausführungsform in geweiteter Stellung,
- Fig. 2: eine Ausschnittsvergrößerung gemäß Ausschnittskreis I in Figur 1,
- Fig. 3: die Kupplung gemäß Figur 1 in geschlossener Stellung,
- Fig. 4: eine Ausschnittsvergrößerung gemäß Ausschnittskreis III in Figur 3,
- Fig. 5: eine zweite Ausführungsform der erfindungsgemäßen Kupplung in geweiteter Stellung,
- Fig. 6: eine Ausschnittsvergrößerung gemäß Ausschnittskreis V in Figur 5,
- Fig. 7: die Kupplung gemäß Figur 5 in geschlossener Stellung,
- Fig. 8: eine Darstellung gemäß Ausschnittskreis VII in Figur 7,
- Fig. 9: eine dritte Ausführungsform der erfindungsgemäßen Kupplung in geweiteter Stellung,
- Fig. 10: eine Ausschnittsvergrößerung gemäß Ausschnittskreis VIIII in Figur 9,
- Fig. 11: die Kupplung gemäß Figur 9 in geschlossener Stellung,
- Fig. 12: eine Darstellung gemäß Ausschnittskreis XI in Figur 11,
- Fig. 13: eine vierte Ausführungsform der erfindungsgemäßen Kupplung in geweiteter Stellung,
- Fig. 14: eine Ansicht gemäß Ausschnittskreis XIII in Figur 13,
- Fig. 15: die Kupplung gemäß Figur 13 in geschlossener Stellung,
- Fig. 16: eine Ansicht gemäß Ausschnittskreis XV in Figur 15,
- Fig. 17: eine fünfte Ausführungsform der erfindungsgemäßen Kupplung in geweiteter Stellung,
- Fig. 18: gemäß Ausschnittskreis XVII in Figur 17,
- Fig. 19: die Kupplung gemäß Figur 17 in geschlossener Stellung,
- Fig. 20: eine Ansicht gemäß Ausschnittskreis XVIIII in Figur 19.

In den Figuren sind Bauteile gleicher bzw. analoger Funktion grundsätzlich mit identischen Bezugsziffern versehen.

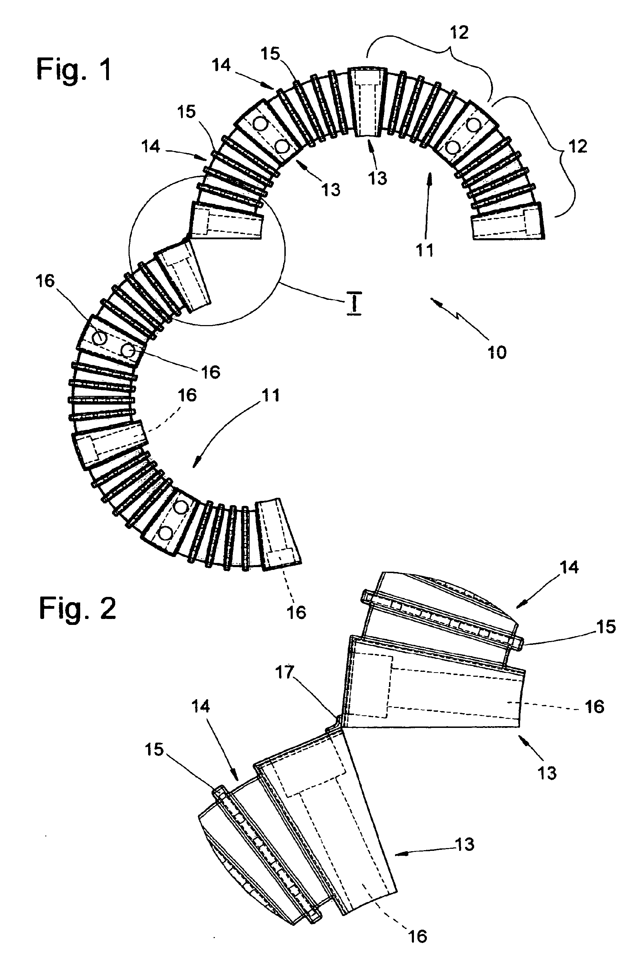

Eine erfindungsgemäße Kupplung ist insgesamt mit der Bezugsziffer 10 versehen. In den Figuren 1 bis 4 ist die erfindungsgemäße Kupplung 10 in einer ersten Ausführungsform dargestellt.

Die Kupplung 10 umfasst zunächst zwei teilringförmig, insbesondere halbringförmig ausgebildete Kupplungselemente 11, welche aus einzelnen Segmenten 12 gebildet sind. Jedes Segment 12 umfasst zwei Befestigungsglieder 13 sowie einen hierzwischen angeordneten Gummikörper 14. Zur Verringerung der Elastizität eines jeden Gummikörpers 14 sind in diesen elastizitätsverringernde Elemente in Form von metallenen Platten 15 einvulkanisiert.

Die Befestigungsglieder 13 sind mit Befestigungsbohrungen 16 versehen, die entweder axial (Fig. 1 in die Papierebene hinein) oder radial (Fig. 1 parallel zur Papierebene) zur nicht dargestellten Rotationsachse der Kupplung 10 ausgerichtet sind.

Die teilringförmigen Kupplungselemente 11 der Kupplung 10 werden durch Vulkanisation erhalten, so dass die metallenen Platten 15 wie auch die metallischen Befestigungsglieder 13 an die Gummikörper 14 anvulkanisiert sind.

Um eine einstückige Kupplung 10 zu erhalten sind zwei stirnseitig an den Kupplungselementen 11 anvulkanisierten Befestigungsglieder 13 mittels eines scharnierartigen Verbindungselements 17 miteinander verbunden (siehe Figur 2). Dieses scharnierartige Verbindungselement 17 ist bevorzugter Weise nach Art eines Filmscharniers aufgebildet und besteht aus demselben Gummimaterial, wie die Gummikörper 14. Es wird im selben Vulkanisationsprozess, mit welchem die Kupplung 10 hergestellt wird, an die radial äußere Oberfläche im Verbindungsbereich der unmittelbar benachbart zueinander liegenden Befestigungselemente 13 anvulkanisiert.

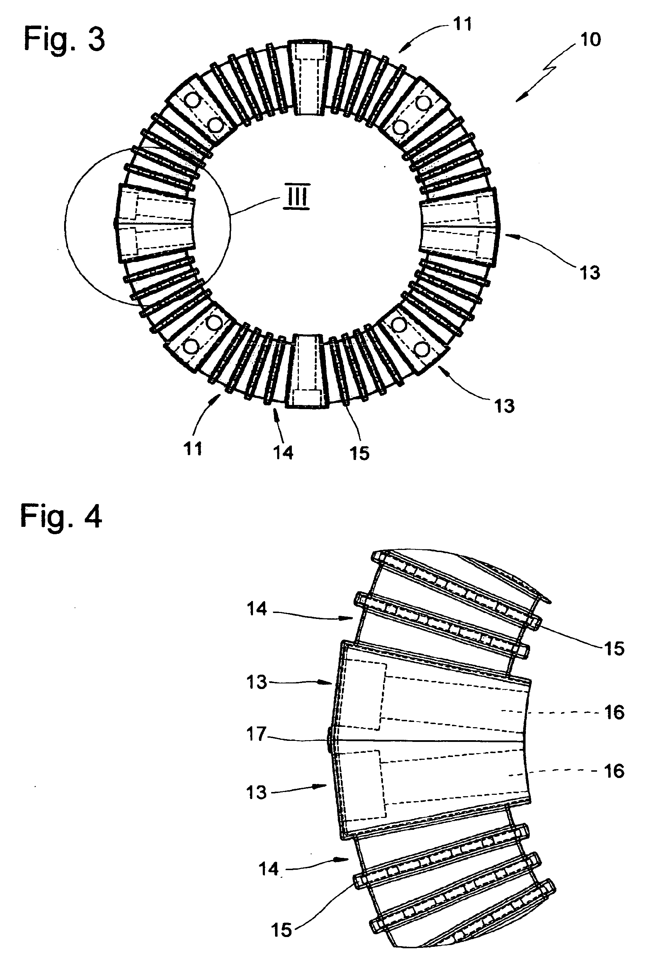

Die Figur 3 zeigt die Kupplung 10 gemäß Figur 1 in ihrer Geschlossenstellung. Hierzu werden die teilringförmigen Kupplungselemente. 11 derart um die Schwenkachse des scharnierartigen Verbindungselementes 17 geschwenkt, dass die stirnseitig an die Kupplungselemente 11 anvulkanisierten Befestigungsglieder 13 aneinander zur Anlage kommen.

Das scharnierartige Verbindungselement 17 dient lediglich der montageunterstützenden Festlegung der Kupplungselemente 11 aneinander. Es nicht geeignet die beim Betrieb der Kupplung entstehenden Schub- und Zugkräfte aufzunehmen. Zur Aufnahme der Schub- und Zugkräfte dienen die mit dem An- bzw. Abtrieb gekoppelten Befestigungsglieder 13.

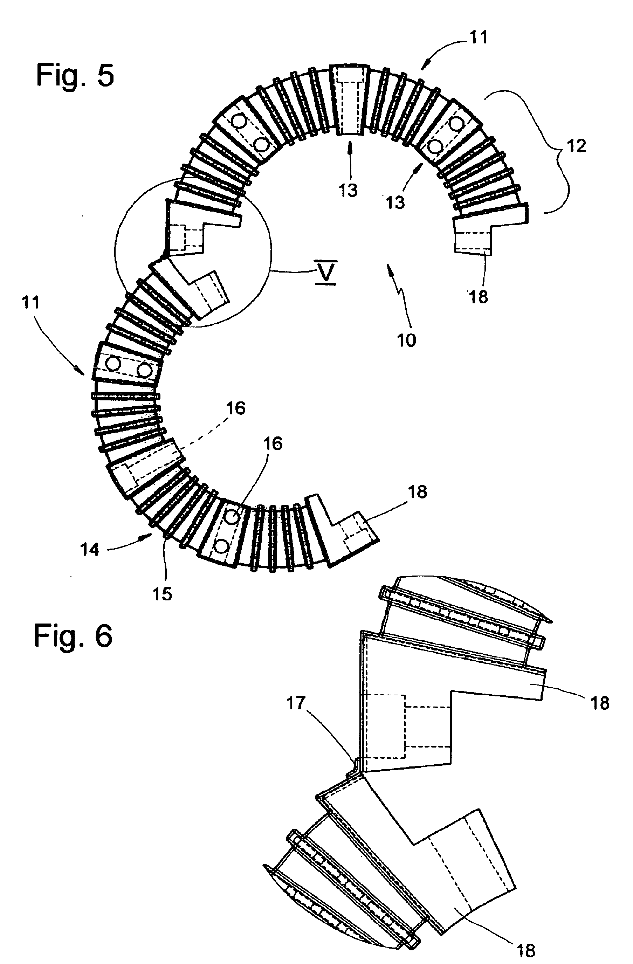

Die Figuren 5 bis 8 zeigen eine zweite Ausführungsform der Erfindung. Auch hier umfasst die Kupplung 10 zwei in etwa teilringförmige Kupplungselemente 11, bestehend aus einzelnen Segmenten 12, welche von zwischen zwei Befestigungsgliedern 13 angeordneten Gummikörpern 14 gebildet sind.

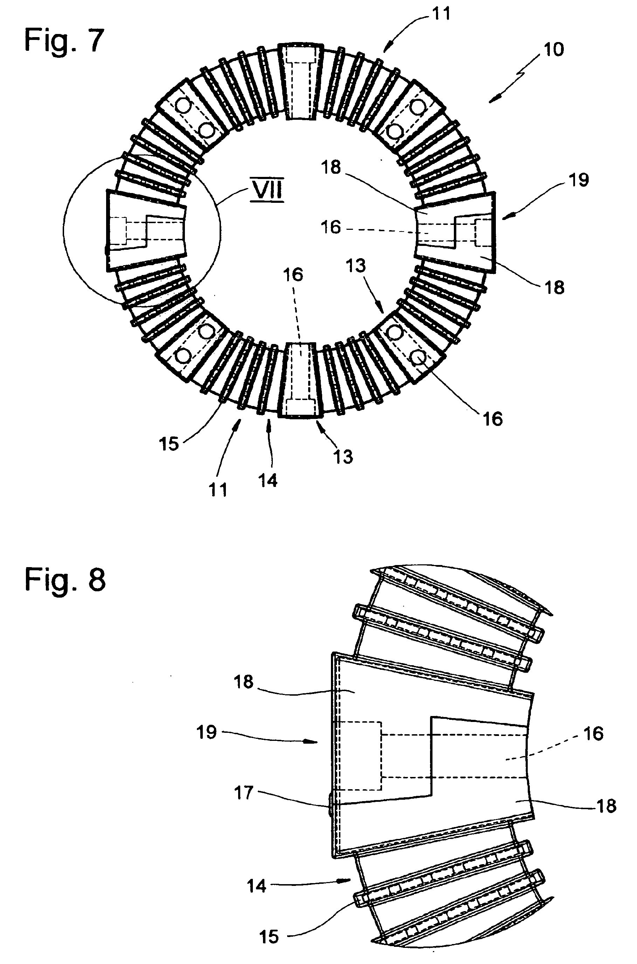

An den Stirnseiten der halbringförmigen Kupplungselemente 11 sind bei der zweiten Ausführungsform der Erfindung Teilelemente 18 je eines aufgespaltenen Befestigungsgliedes 19 (siehe Figuren 7 und 8) angeordnet.

Das Befestigungsglied 19 ist in etwa stufenförmig in zwei Teilelemente 18 aufgespalten. Dies wird erreicht, in dem hier im konkreten Ausführungsbeispiel ein Befestigungsglied mit radial gerichteter Bohrung bis etwa zur Hälfte seiner radialen Längserstreckung parallel zur Bohrung eingeschnitten ist. Daran anschließend ist ein die Bohrung schneidender (konkret quer zur Bohrung gerichteter) Schnitt gesetzt, an den sich dann wiederum ein radial erstreckender Schnitt anschließt.

Auch ein Befestigungsglied 13 mit axialen Befestigungsbohrungen lässt sich als aufgespaltenes Befestigungsglied 13 konstruieren. In diesem Fall wäre ein erster Schnitt parallel zur Bohrungslängsachse in Axialrichtung einzubringen, daran schlösse sich ein die Bohrung schneidender Schnitt an. Ein weiterer Axialschnitt führt zur Aufspaltung des Befestigungselementes 13.

Eines dieser Befestigungsglieder 19 ist mit einem scharnierartigen Verbindungselement 17 versehen, welches die beiden durch Spaltung erhaltenen, zusammengehörenden Teilelemente 18 des Befestigungsgliedes 19 miteinander verbindet. In seiner Eigenart ist dieses scharnierartige Verbindungselement identisch mit demjenigen, welches zur ersten Ausführungsform (Figuren 1 bis 4) beschrieben wurde.

Der wesentliche Vorteil dieser Ausführungsform ist darin zu sehen, dass zur belastbaren Verbindung der teilringförmigen Kupplungselemente 11 im Gegensatz zur ersten Ausführungsform lediglich ein radial in An- oder Abtrieb eingreifender Befestigungsbolzen notwendig ist. Dieser durchgreift beide miteinander fluchtend liegende Teilbohrungen der Teilelemente 18. Neben dem geringeren Montageaufwand benötigt diese Ausführungsform zwei Befestigungsglieder 13 weniger. Auch ist auf Seiten der Nabe die Bearbeitung einfacher, da bei der zweiten Ausführungsform zwei Bohrungen statt der bei der ersten Ausführungsform notwendigen vier Bohrungen ausreichend sind.

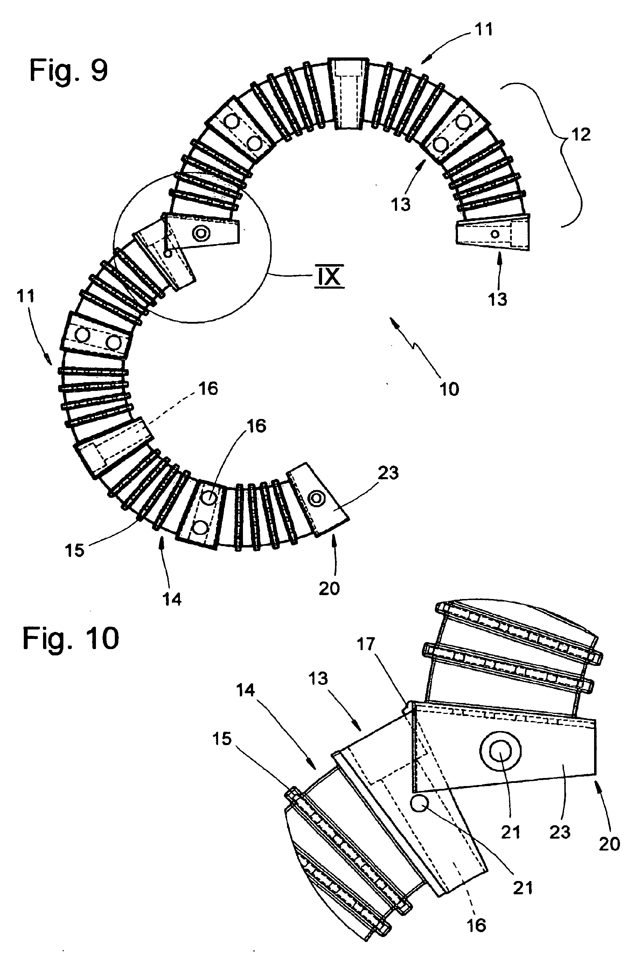

Eine dritte Ausführungsform der Erfindung ist in den Figuren 9 bis 12 dargestellt. Auch hier umfasst die Kupplung 10 wiederum zwei teilringförmige Kupplungselemente 11, welche aus einzelnen Segmenten 12 bestehen. Jedes Segment 12 weist wiederum einen zwischen zwei Befestigungsgliedern 13 angeordneten Gummikörper 14 mit einvulkanisierten, elastizitätsverringernden Platten 15 auf.

In Abänderung zu den vorherigen Ausführungsformen der Erfindung ist an der ersten Stirnfläche eines jeden teilringförmigen Kupplungselementes 11 ein Befestigungsglied 13 anvulkanisiert, an der zweiten Stirnfläche eines jeden teilringförmigen Kupplungselementes 11 ist jedoch ein Ansatzstück 20 anstelle eines Befestigungsgliedes 13 befestigt.

Die teilringförmigen Kupplungselemente 11 sind derart zueinander orientiert, dass der mit Befestigungsglied 13 versehenen Stirnfläche des einen die mit dem Ansatzstück 20 versehene Stirnfläche des anderen Kupplungselementes 11 zugewandt ist.

Wie die Ausschnittsvergrößerung der Figur 10 zeigt, ist eine Paarung von stirnflächenseitigem Befestigungsglied 13 und Ansatzstück 20 über das scharnierartige Verbindungselement 17 miteinander unverlierbar gekoppelt, so dass die Kupplung 10 gemäß den vorherigen Ausführungsformen einstückig aber radial aufweitbar ist.

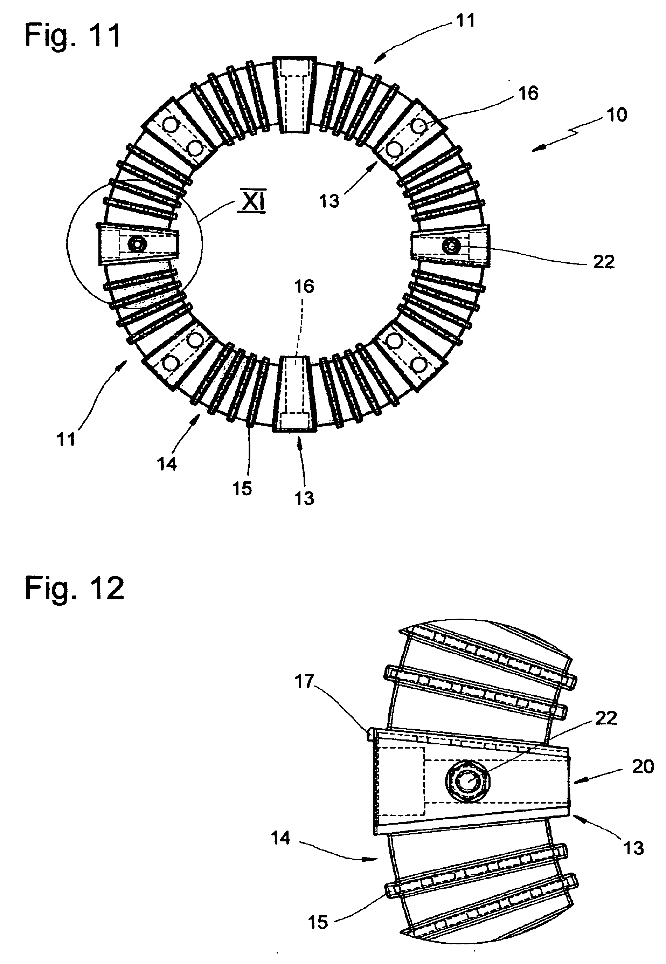

Sowohl das Ansatzstück 20 wie auch das Befestigungsglied 13 einer jeden Paarung ist mit einer axialen Bohrung 21 versehen, so dass im geschlossenen Zustand (Figur 11 und Figur 12) das Ansatzstück 20 und das Befestigungsglied 13 einer Paarung betriebssicher belastbar miteinander durch einen Schraubbolzen 22 gekoppelt sind. Das Ansatzstück 20 weist hierzu wenigstens eine, besser jedoch zwei zueinander parallel ausgerichtete Seitenwangen 23 auf, die mit der entsprechenden Axialbohrung 21 versehen sind und in geschlossener Stellung der Kupplung 10 die Axialflächen (parallel zur Papierebene gerichtete Flächen) des zur Paarung gehörenden Befestigungsgliedes 13 übergreifen. Hierbei fluchten die Axialbohrungen 21 von dem Ansatzstück 20 und dem Befestigungsglied 13.

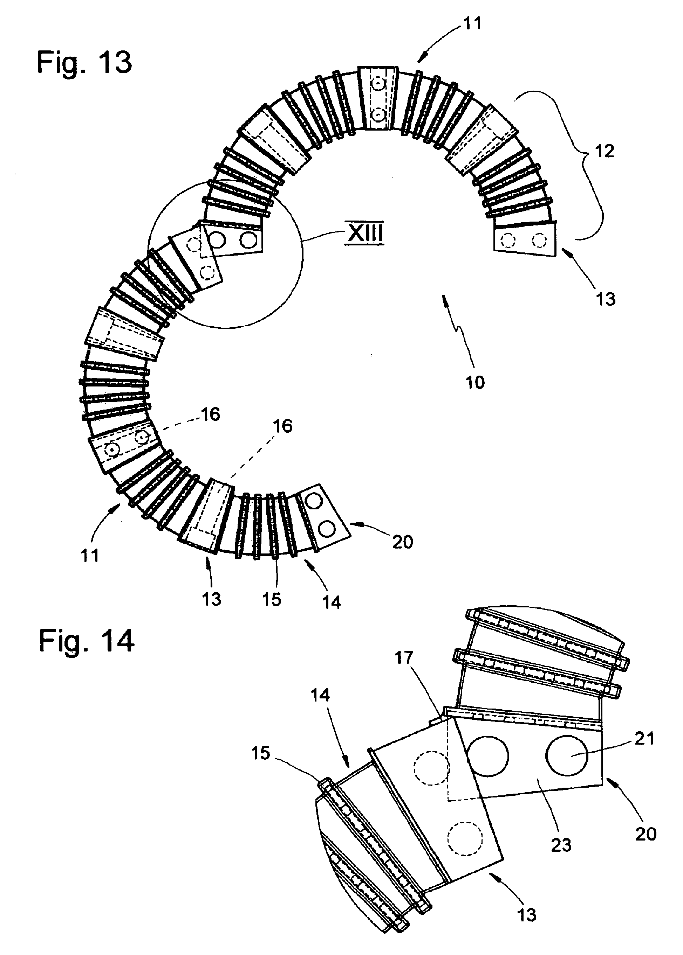

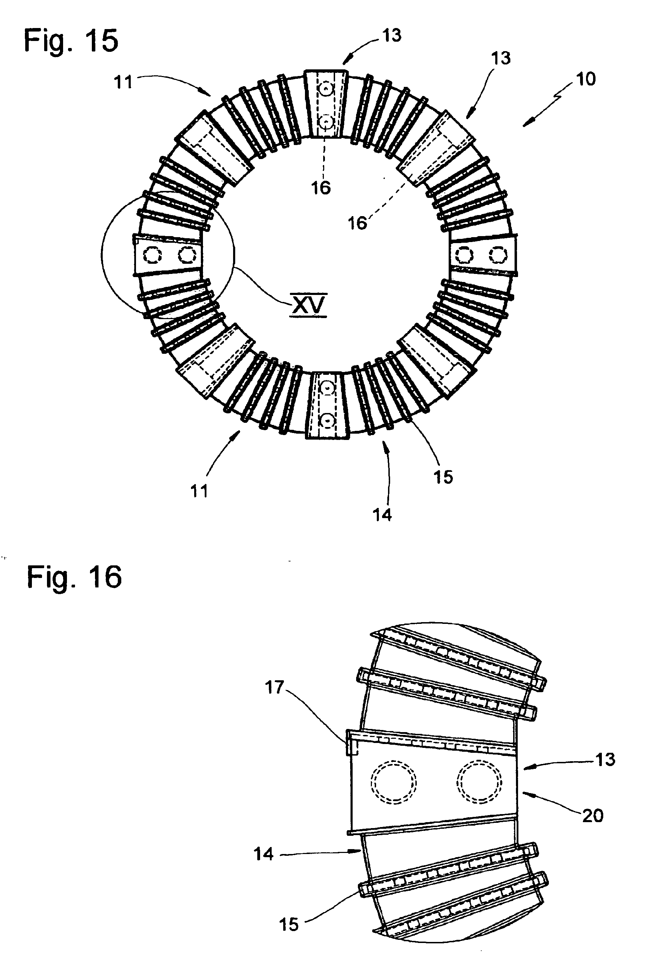

Eine vierte Ausführungsform der erfindungsgemäßen Kupplung 10 ist in den Figuren 13 bis 16 dargestellt. Diese ist von ihrem Aufbau und ihrer Funktion identisch mit der Ausführungsform der Figuren 9 bis 12. Im Gegensatz zu dieser weist das stirnseitig angeordnete Befestigungsglied 13 jedoch nicht eine radial weisende sondern zwei axial weisende Bohrungen auf, mit welchen das Befestigungsglied 13 am An- oder Abtrieb befestigbar ist. In Folge dessen weist auch das zugehörige Ansatzstück 20 in seinen Seitenwangen 23 zwei Axialbohrungen 21 auf. Diese fluchten in dem in den Figuren 15 und 16 dargestellten, geschlossenen Zustand der Kupplung 10 mit den Axialbohrungen 16 des zugehörigen Befestigungsgliedes 13. Dies hat den wesentlichen Vorteil, dass die beiden Kupplungselemente 11 mittels der die Kupplung am An-oder Abtrieb befestigenden Schraubbolzen miteinander belastbar verbunden sind. Auf die separate Sicherung, die bei der Ausführungsform gemäß den Figuren 9 bis 12 notwendig ist, kann hier verzichtet werden.

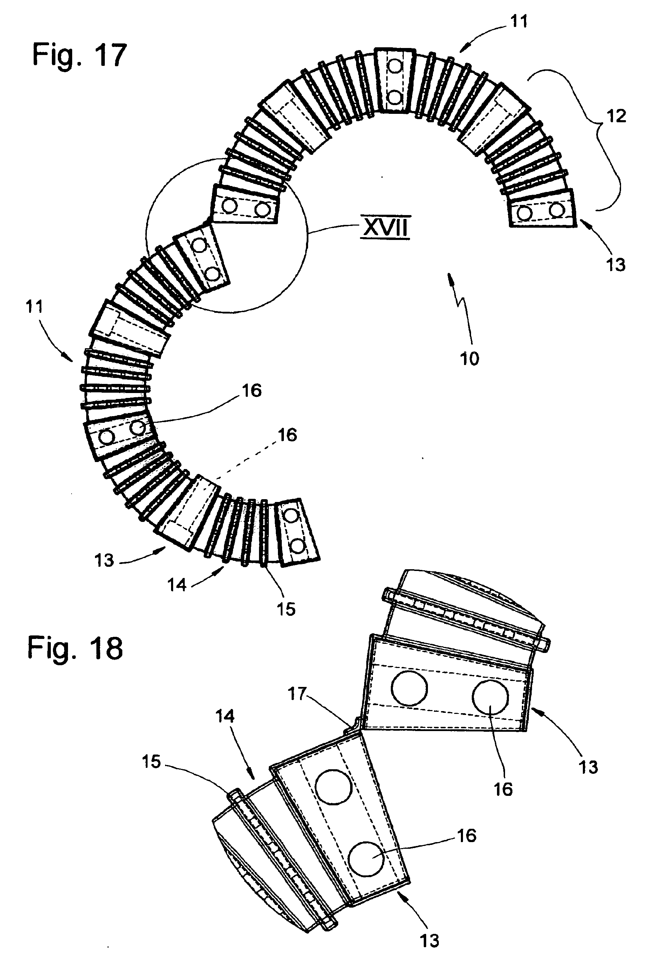

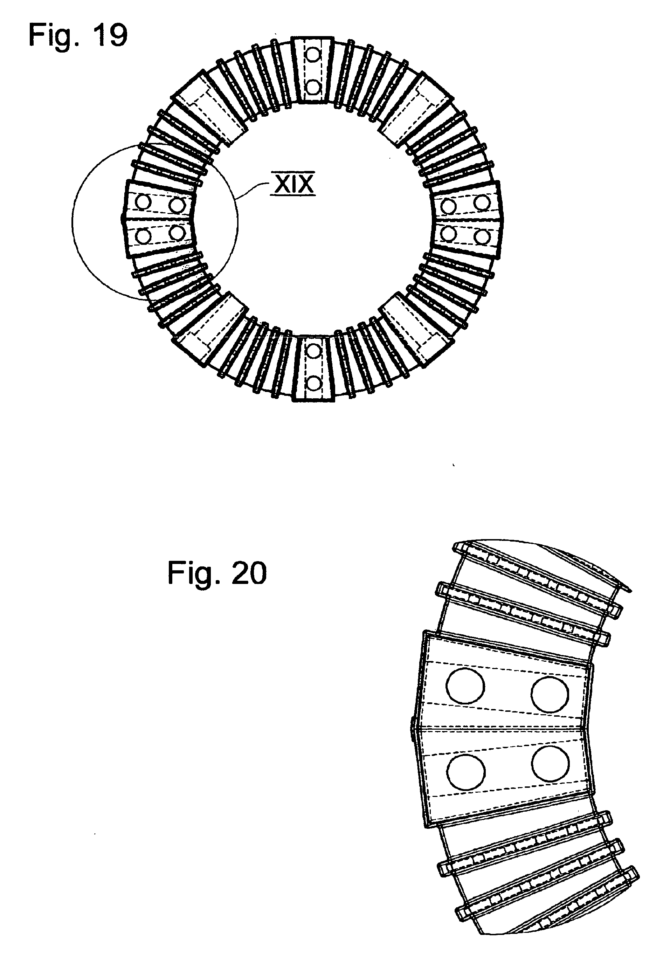

Schließlich ist in den Figuren 17 bis 20 eine fünfte Ausführungsform der erfindungsgemäßen Kupplung 10 dargestellt. Hierbei handelt es sich um eine in Funktion und Aufbau analog zur ersten Ausführungsform der Erfindung aufgebauten Kupplung 10. Insofern ist das dazu Gesagte auch auf die Figuren 18 bis 20 zu lesen. Der wesentliche Unterschied besteht darin, dass die stirnseitig an den ringförmigen Kupplungselementen 11 anvulkanisierten Befestigungsglieder 13 solche sind, die axiale Bohrungen 16 zur Festlegung an An- oder Abtrieb aufweisen.

Zusammenfassend wurde eine Kupplung 10 offenbart, die im Vergleich zum Stand der Technik den wesentlichen Vorteil der Einstückigkeit bietet. Die aus dem Stand der Technik für Keilpaketkupplungen bekannten, aufwendigen Elastizitätsprüfungen der Einzelsegmente und deren entsprechend ihrer Elastizitätswerte angepasste Lagerhaltung entfällt. Die Kupplung 10 lässt sich in einem einzigen Produktionsvorgang montagefertig vulkanisieren. Sie darüber hinaus wesentliche Vorteile bei der Montage. Da die Segmente 12 einstückig aneinander festgelegt sind, bedarf es einer geringeren Anzahl an Befestigungsgliedern 13, was eine schnellere Montage ermöglicht.

### Bezugszeichenliste:

- 10: Kupplung
- 11: Kupplungselement
- 12: Segment von 11
- 13: Befestigungsglied
- 14: Gummikörper
- 15: metallene Platte
- 16: Befestigungsbohrung
- 17: scharnierartiges Verbindungselement
- 18: Teilelement von 19
- 19: aufgespaltenes Befestigungsglied
- 20: Ansatzstück
- 21: Axialbohrung von 13 und 20
- 22: Schraubbolzen
- 23: Seitenwange von 20

## Patentansprüche

1. Kupplung (10), insbesondere Keilpaketkupplung, mit einem im Wesentlichen ringförmigen Kupplungskörper, welcher aus einer Vielzahl einzelner gummielastischer Segmente (12) gebildet ist, in welche Befestigungsglieder (13) mit Befestigungsbohrungen (16) zur Anordnung an einem antreibenden und einem angetriebenen Maschinenbauteil sowie elastizitätsverringernde Elemente (15) einvulkanisiert sind, **dadurch gekennzeichnet, dass** Segmente (12) mittels scharnierartiger Verbindungselemente (17) aneinander festgelegt sind und einen einstückigen, radial aufweitbaren, im Wesentlichen ringförmigen Kupplungskörper bilden.

2. Kupplung nach Anspruch 1, **dadurch gekennzeichnet, dass** die Segmente (12) zwei jeweils einstückige in etwa halbringförmige Kupplungselemente (11) bilden, wobei die zwei halbringförmigen Kupplungselemente (11) mittels eines scharnierartigen Verbindungselementes (17) verbunden sind und einen einstückigen, im wesentlichen ringförmigen Kupplungskörper bilden.

3. Kupplung nach Anspruch 2. **dadurch gekennzeichnet, dass** die zwei Kupplungselemente (11) im Bereich eines ersten Befestigungsgliedes (13) werkstoffeinheitlich-stoffschlüssig mittels eines scharnierartigen Verbindungsstücks (17) einstückig aneinander festgelegt sind, welches vom gummielastischen Material der Segmente (12) gebildet ist.

4. Kupplung nach einem der vorhergehenden Ansprüche, **dadurch gekennzeichnet, dass** das scharnierartige Verbindungsstück (17) an ein erstes Befestigungsglied (13) anvulkanisiert ist.

5. Kupplung nach einem der vorhergehenden Ansprüche, **dadurch gekennzeichnet, dass** wenigstens ein teilringförmiges Kupplungselement (11) an seiner Stirnseite mit einem Ansatzstück (20) versehen sind, mittels dessen es betriebssicher am anderen teilringförmigen Kupplungselement (11) festlegbar ist.

6. Kupplung nach einem der vorhergehenden Ansprüche, **dadurch gekennzeichnet, dass** an einander zugewandten Stirnseiten zweier Kupplungselemente je ein Befestigungsglied (13) angeordnet ist.

7. Kupplung nach einem der vorhergehenden Ansprüche, **dadurch gekennzeichnet, dass** an einander zugewandten Stirnseiten zweier Kupplungselemente (11) je ein Teilelement (18) eines insbesondere stufenförmig aufgespaltenen Befestigungsgliedes (13) angeordnet ist.

8. Kupplung nach einem der vorhergehenden Ansprüche, **dadurch gekennzeichnet, dass** das scharnierartige Verbindungsstück (17) unmittelbar an zwei benachbarten Befestigungsgliedern (13) befestigt ist.

9. Kupplung nach Anspruch 5, **dadurch gekennzeichnet, dass** das scharnierartige Verbindungselement (17) unmittelbar an einem Befestigungsglied (13) und einem benachbarten Ansatzstück (20) befestigt ist.

10. Kupplung nach Anspruch 7, **dadurch gekennzeichnet, dass** das scharnierartige Verbindungselement (17) die Teilelemente (18) eines zweiteilig stufenartig aufgespaltenen Befestigungsgliedes (13) miteinander verbindet.

11. Kupplung nach Anspruch 7, **dadurch gekennzeichnet, dass** das Befestigungsglied (13) die Längsachse der Befestigungsbohrung (16) schneidend aufgespalten ist.

## Claims

1. Coupling (10), in particular a key packet coupling, having a substantially annular coupling body which is formed from a large number of individual rubbery-elastic segments (12) into which fastening members (13) with fastening bores (16) for arrangement on a driving and a driven machine component, and also elasticity-reducing elements (15), are vulcanised, **characterised in that**
segments (12) are fixed to one another by means of hinge-like connecting elements (17) and form a one-piece, substantially annular coupling body that can be opened out radially.

2. Coupling according to claim 1, **characterised in that** the segments (12) form two coupling elements (11) which are in one piece in each case and are approximately semi-annular, said two semi-annular coupling elements (11) being connected by means of a hinge-like connecting element (17) and forming a one-piece, substantially annular coupling body.

3. Coupling according to claim 2, **characterised in that** the two coupling elements (11) are fixed to one another in one piece in the region of a first fastening member (13) integrally and from the same material by means of a hinge-like connecting piece (17) which is formed by the rubbery-elastic material of the segments (12).

4. Coupling according to one of the preceding claims, **characterised in that** the hinge-like connecting piece (17) is vulcanised onto a first fastening member (13).

5. Coupling according to one of the preceding claims, **characterised in that** at least one partially annular coupling element (11) is provided, on its end face, with an extension piece (20) by means of which it can be fixed to the other partially annular coupling element (11) in an operationally reliable manner.

6. Coupling according to one of the preceding claims, **characterised in that** a fastening member (13) is arranged on each of the end faces, which face towards one another, of two coupling elements.

7. Coupling according to one of the preceding claims, **characterised in that** a fastening member (13), which is, in particular, split up in a step-shaped manner, is arranged on each of the end faces, which face towards one another, of two coupling elements (11).

8. Coupling according to one of the preceding claims, **characterised in that** the hinge-like connecting piece (17) is fastened directly to two adjacent fastening members (13).

9. Coupling according to claim 5, **characterised in that** the hinge-like connecting element (17) is fastened directly to a fastening member (13) and an adjacent extension piece (20).

10. Coupling according to claim 7, **characterised in that** the hinge-like connecting piece (17) connects to one another the partial elements (18) of a fastening member (13) which is split up into two parts in a step-like manner.

11. Coupling according to claim 7, **characterised in that** the fastening member (13) is split up in a manner intersecting the longitudinal axis of the fastening bore (16).

## Revendications

1. Embrayage (10), en particulier embrayage à paquets de coins, avec un corps d'embrayage essentiellement annulaire, lequel est formé d'une multitude de segments (12) en caoutchouc élastique séparés, dans lesquels sont vulcanisés des organes de fixation (13) avec des perçages de fixation (16) pour disposition au niveau d'une partie de machine d'entraînement et d'une partie de machine entraînée, ainsi que des éléments (15) réduisant l'élasticité, **caractérisé en ce que** des segments (12) sont fixés les uns contre les autres à l'aide d'éléments de liaison à la façon de charnière (17) et forment un corps d'embrayage d'une seule pièce, à expansion radiale et essentiellement annulaire.

2. Embrayage selon la revendication 1, **caractérisé en ce que** les segments (12) forment deux éléments d'embrayage (11) respectivement d'un seul tenant et de forme à peu près demi-annulaire, les deux éléments d'embrayage de forme demi-annulaire (11) étant reliés à l'aide d'un élément de liaison à la façon de charnière (17) et formant un corps d'embrayage d'un seul tenant, essentiellement annulaire.

3. Embrayage selon la revendication 2, **caractérisé en ce que** les deux éléments d'embrayage (11) sont fixés, dans la zone d'un premier organe de fixation (13), de façon unitaire quant au matériau et en complémentarité de matière, l'un contre l'autre, d'un seul tenant, à l'aide d'une pièce de liaison à la forme de charnière (17), laquelle est formée du matériau en caoutchouc élastique des segments (12).

4. Embrayage selon l'une des précédentes revendications, **caractérisé en ce que** la pièce de liaison à la façon de charnière (17) est vulcanisée au niveau d'un premier organe de fixation (13).

5. Embrayage selon l'une des précédentes revendications, **caractérisé en ce qu'**au moins un élément d'embrayage (11) partiellement annulaire est muni au niveau de son côté face d'un embout (20) à l'aide duquel il peut être fixé fiablement au niveau d'un autre élément d'embrayage (11) partiellement annulaire.

6. Embrayage selon l'une des précédentes revendications, **caractérisé en ce que** chaque organe de fixation (13) est disposé au niveau des côtes face orientés les uns vers les autres de deux éléments d'embrayage.

7. Embrayage selon l'une des précédentes revendications, **caractérisé en ce que** chaque composant (18) d'un organe de fixation (13) scindé en particulier sous forme étagée est disposé au niveau des côtes face orientés les uns vers les autres de deux éléments d'embrayage (11).

8. Embrayage selon l'une des précédentes revendications, **caractérisé en ce que** la pièce de liaison à la façon de charnière (17) est fixée directement au niveau de deux organes de fixation (13) contigus.

9. Embrayage selon la revendication 5, **caractérisé en ce que** l'élément de liaison à la façon de charnière (17) est fixé directement au niveau d'un organe de fixation (13) et d'un embout (20) contigu.

10. Embrayage selon la revendication 7, **caractérisé en ce que** l'élément de liaison à la façon de charnière (17) relie ensemble les composants (18) d'un organe de fixation (13) scindé en deux parties sous forme étagée.

11. Embrayage selon la revendication 7, **caractérisé en ce que** l'organe de fixation (13) est scindé coupant l'axe longitudinal du perçage de fixation (16).
